# EUROPÄISCHE PATENTSCHRIFT

(11) **EP 0 584 895 B1**
(45) Veröffentlichungstag und Bekanntmachung des Hinweises auf die Patenterteilung: **13.11.1996**
(21) Anmeldenummer: 93250174.5
(22) Anmeldetag: 17.06.1993
(51) Int. Cl.: B61L 25/08

(54) **Verfahren zum signaltechnisch sicheren Anzeigen verkehrstechnischer Informationen eines Verkehrswegesystems**
Fail-safe displaying method of traffic technical information for a traffic route system
Procédé d'affichage d'une manière fiable d'informations techniques routières pour un système de routes de circulation

(30) Priorität: 28.08.1992 DE 4228917
(43) Veröffentlichungstag der Anmeldung: 02.03.1994
(73) Patentinhaber: SIEMENS AKTIENGESELLSCHAFT, 80333 München (DE)
(72) Erfinder: Raimer, Jürgen, Dipl.-Ing., D-3340 Wolfenbüttel (DE)

(56) Entgegenhaltungen:
- CH-A- 653 298
- DE-C- 2 414 247

## Beschreibung

Die Erfindung betrifft ein Verfahren zum signaltechnisch sicheren Anzeigen verkehrstechnischer Informationen eines Verkehrswegesystems, insbesondere eines Gleissystems, und eine Vorrichtung zur Verfahrensdurchführung.

Zur Überwachung und Steuerung von Verkehrsprozessen werden häufig Anzeigegeräte verwendet, um aus entsprechend aufbereiteten Daten über den Betriebszustand einzelner Elemente oder Wegabschnitte eines Verkehrswegesystems gewonnene Informationen symbolhaft anzuzeigen.

Aus der Zeitschrift Järnvagsteknik, 76, 2-3, März 1976, Seiten 46 und 47 ("On a method using CRT VDU:s to display information in a safe manner") ist ein Verfahren zum störungssicheren Anzeigen verkehrstechnischer Informationen auf einem Anzeigegerät in sog. Semigraphik bekannt, bei dem von einer Betriebsleiteinrichtung Daten abgegeben werden, die den Betriebszustand einzelner Elemente oder Wegabschnitte beschreiben. Unter dem Begriff Betriebszustand sind im Rahmen der vorliegenden Erfindung z. B. die Stellung von einzelnen Elementen (z. B. Weichen, Gleisen, Signalen), die Beanspruchung für eine Fahrstraße, die Besetzung durch ein Fahrzeug oder das Verschließen gegen weitere Stellaufträge zu verstehen. Die einzelnen Elemente oder Wegabschnitte werden durch vorgegebene, vorzugsweise vollflächig farbig ausgefüllte Symbole (z. B. eines speziellen verkehrstechnischen Zeichensatzes) oder Buchstaben dargestellt, denen jeweils eine Farbinformation zugeordnet wird. Die Farbinformation des Symbols repräsentiert einen bestimmten Betriebszustand des jeweiligen Elements. Die Daten werden sequenziell symbol- oder buchstabenweise entsprechend ihrer gewünschten benachbarten Darstellung an das Anzeigegerät übertragen. Dort werden die Symbole oder Buchstaben generiert (Semigraphik). Um eine hohe Sicherheit gegen nicht ohne weiteres erkennbare Darstellungsverfälschungen zu gewährleisten, wird bei dem bekannten Verfahren das Anzeigegerät alternierend von zwei parallel arbeitenden Steuerungen (zweikanalig) angesteuert. Dem Betrachter werden dadurch Defekte in einer der Steuerungen durch im Umschalttakt wechselnde Form und/oder Farbe der Symbole oder Buchstaben angezeigt. Um ein stabiles Bild zu erhalten, ist eine Fremdsynchronisation der parallel arbeitenden Steuerungen erforderlich. Bei diesem bekannten Verfahren ist die erzielbare Datenübertragungsrate begrenzt.

Mit zunehmender Entwicklung von Anzeigegeräten, die eine größere Auflösung und Farbenauswahl bieten, und dem Wunsch nach höherer Flexibilität in der Darstellung besteht das Bestreben, in Vollgraphik arbeitende Anzeigesysteme einsetzen zu können. Diese Systeme arbeiten mit vergleichsweise hoher Bildwiederholfrequenz. Bei erhöhtem Datendurchsatz und wesentlich höherer Bildwiederholfrequenz ist eine Synchronisation parallel arbeitender Steuerungen mit handelsüblichen Bauteilen mit einem vertretbaren Kostenaufwand nicht möglich.

DE-A-2 414 247 offenbart ein Verfahren zum signaltechnisch sicheren Anzeigen verkehrstechnischer Informationen eines Verkehrswegesystems mit den Merkmalen des Oberbegriffs des Anspruchs 1 und eine Vorrichtung zur Verfahrensdurchführung mit den Merkmalen des Oberbegriffs des Anspruchs 9.

Die Aufgabe der Erfindung besteht in der Schaffung eines Verfahrens zum störungssicheren und verkehrstechnisch sicheren Anzeigen verkehrstechnischer Informationen eines Verkehrswegesystems, bei dem unter Verwendung eines in Vollgraphik arbeitenden Anzeigegeräts eine ausreichende Sicherheit bei der Erkennung von Funktionsstörungen gewährleistet ist.

Diese Aufgabe wird erfindungsgemäß gelöst durch ein Verfahren zum signaltechnisch sicheren Anzeigen verkehrstechnischer Informationen eines Verkehrswegesystems, insbesondere eines Gleissystems, auf einem Anzeigegerät,
- bei dem von einer Betriebsleiteinrichtung, insbesondere von einem Stellwerk, Daten über den Betriebszustand einzelner Elemente abgegeben werden,
- bei dem den Elementen jeweils aus einzelnen Bildpunkten zusammengesetzte Symbole zugeordnet werden,
   - wobei den Bildpunkten eines Symbols jeweils gemäß den betriebszustandsspezifischen aktuellen Daten für das jeweilige Element dieselben Farbwerte zugeordnet werden und
   - wobei die Farbwerte gespeichert werden,
- bei dem die Symbole in Vollgraphik auf dem Anzeigegerät dargestellt werden,
- dadurch gekennzeichnet, daß in einer ersten Überprüfungsroutine der gespeicherte Farbwert eines ausgewählten Bildpunktes eines zu überprüfenden Symbols ausgelesen und der von diesem Farbwert repräsentierte Betriebszustand des zugehörigen Elements mit dem Datum für das betreffende Element verglichen wird
- bei dem bei Ungleichheit eine Fehlermeldung generiert wird.

Ein wesentlicher Vorteil des erfindungsgemäßen Verfahrens besteht darin, daß handelsübliche Steuerungen (Graphikkarten) mit Speichern (sog. Bitmap) verwendet werden können, die für jeden einzelnen Bildpunkt einen ein bis drei Byte großen Farbwert speichern können. Auf die einzelnen Farbwerte kann durch geeignete Adressierungen des jeweiligen Speicherinhalts zugegriffen werden. Der Speicher (Bitmap) bietet die vor dem Anzeigegerät letzte Zugriffsmöglichkeit auf Daten im Digitalbereich, die den Betriebszustand wiedergeben. Ein weiterer wesentlicher Vorteil des erfindungsgemäßen Verfahrens besteht darin, daß quasi ein einzelner Farbwert stellvertretend für das jeweilige Symbol überprüft werden kann. Das erfindungsgemäße Verfahren erlaubt so eine sehr schnelle Auswertung bzw. Überprüfung der angezeigten Symbole und eine entsprechend kurze Reaktionszeit im Fehlerfall. Während also bei dem eingangs genannten bekannten Verfahren die geforderte Sicherheit durch schaltungstechnische Redundanzen (unter Mitwirkung des Betrachters) gewährleistet wird, wird bei dem erfindungsgemäßen Verfahren bei einer einkanaligen, aufwandsarmen Schaltung die Verfahrenssicherheit durch die erste Überprüfungsroutine gewährleistet.

Zur Überprüfung beispielsweise kreisförmiger Symbole ist gemäß einer vorteilhaften Ausgestaltung des erfindungsgemäßen Verfahrens vorgesehen, daß der ausgewählte Bildpunkt des zu überprüfenden Symbols der Mittelpunkt der Symbolfläche ist. Die Mittelpunktskoordinaten liegen beispielsweise bei einer Kreisdarstellung in Polarkoordinaten unmittelbar vor.

Bei Symbolen, die durch geschlossene Polygonzüge begrenzt sind, ist gemäß einer bevorzugten Ausgestaltung der Erfindung der ausgewählte Bildpunkt des zu überprüfenden Symbols ein Eckpunkt der Symbolfläche.

Eine weitere vorteilhafte Ausgestaltung des erfindungsgemäßen Verfahrens sieht vor, daß in einem mehrere Symbole enthaltenden Verkehrswegesystemplan zur Verbindung der Symbole optische Verbindungssymbole dargestellt werden, die durch spezielle Kennungsdaten als sicherungstechnisch unrelevant gekennzeichnet werden. Diese Darstellung ermöglicht dem Bediener eine besonders gute Übersicht über die Betriebsprozesse des zu überwachenden oder zu steuernden Verkehrswegesystems.

Eine vorteilhafte Fortbildung des erfindungsgemäßen Verfahrens sieht eine weitere Überprüfungsroutine vor, bei der die gespeicherten Farbwerte zu Testzwecken gezielt verändert werden. Das erfindungsgemäße Verfahren ermöglicht in dieser Ausgestaltung eine von manchen Anwendern gewünschte zyklische Funktionsüberwachung hinsichtlich der Fehlererkennung. In diesem Zusammenhang können die Farbwerte vorteilhafterweise zu vorbestimmten Zeiten, vorzugsweise zyklisch mit einer vorgegebenen Periode von einigen Minuten bis Tagen, verändert werden. Durch die gezielte Veränderung von Farbwerten wird von der ersten Überprüfungsroutine aufgrund der künstlich herbeigeführten Ungleichheit eine Fehlermeldung generiert, mit der die Funktionsfähigkeit des erfindungsgemäßen Verfahrens überprüfbar ist.

Die ursprünglichen Farbwerte können jeweils durch erheblich abweichende Farbwerte ersetzt werden, so daß eine Bedienperson den Testbetrieb sofort erkennen kann. Eine besonders bevorzugte Ausgestaltung des erfindungsgemäßen Verfahrens besteht jedoch darin, daß die ursprünglichen Farbwerte jeweils durch Farbwerte ersetzt werden, die einer für das menschliche Auge kaum wahrnehmbaren Farbänderung entsprechen. Dies ermöglicht eine von dem Bediener nahezu unbemerkte Ausführung der weiteren Überprüfungsroutine ohne Betriebsunterbrechung.

Eine hinsichtlich der sicherungstechnischen Protokollierung besonders vorteilhafte Ausgestaltung des erfindungsgemäßen Verfahrens sieht vor, daß infolge der Farbwertänderungen generierte Fehlermeldungen automatisch protokolliert werden und daß anschließend zum Abschluß der weiteren Überprüfungsroutine wieder die ursprünglichen Farbwerte eingestellt werden.

Neben der verfahrensgemäßen Ausgabe der Fehlermeldung bei Ungleichheit des Farbwertes des ausgewählten Bildpunktes des zu überprüfenden Symbols mit dem Datum für den betreffenden Wegabschnitt können auch sog. Hilfshandlungen (Handlungen, die die Sicherheitssperren der Betriebsleiteinrichtung umgehen) gesperrt werden. Entsprechend werden diese Hilfshandlungen auch während des Ablaufs der weiteren Überprüfungsroutine gesperrt.

Eine bevorzugte Vorrichtung zur Durchführung des erfindungsgemäßen Verfahrens ist in Anspruch 9 angegeben.

Die Erfindung wird nachfolgend beispielhaft anhand einer Zeichnung weiter erläutert. Es zeigen:
Figur 1 die Struktur des erfindungsgemäßen Verfahrens anhand einer Vorrichtung zur Durchführung des Verfahrens,
Figuren 2A und 2B Elemente eines Verkehrswegesystems in verschiedenen Betriebszuständen und
Figur 3 verschiedenen Betriebszuständen der Elemente zugeordnete Farbwerte.

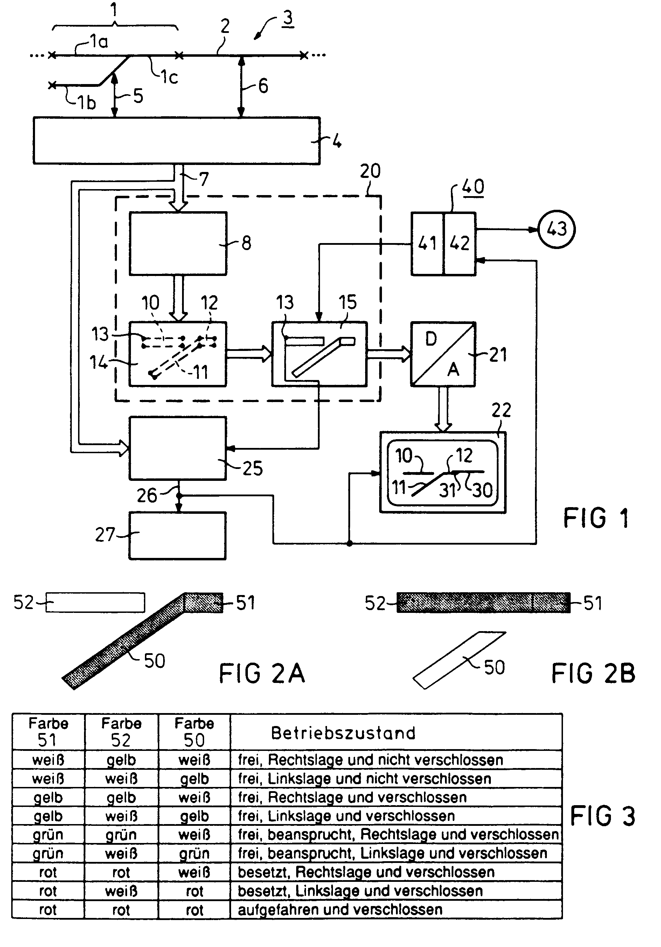

Figur 1 zeigt eine von Elementen 1a,1b,1c gebildete schaltbare Weiche 1 und ein gerades Element 2 eines Verkehrswegesystems 3 in Form eines Gleissystems, an die sich nicht gezeigte weitere Elemente anschließen. Eine Betriebsleiteinrichtung 4 bewirkt gemäß vorgegebener Fahrpfade die richtigen Einstellungen der Elemente (z. B. Stellung der Weiche 1) und empfängt von an den Elementen angeordneten Zustands- und Stellungsmeldern Informationen 5 und 6 über die Betriebszustände (z. B. Stellung, Besetzung ) der Elemente 1a,1b,1c und 2. Die Betriebsleiteinrichtung 4 gibt von den Informationen 5 und 6 abhängige Daten 7 an eine Recheneinheit 8 ab. Die Recheneinheit ordnet z. B. den Elementen 1a,1b,1c und 2 aus einzelnen Bildpunkten zusammengesetzte Symbole 10,11 und 12 in Form von vollflächig gefüllten Flächen zu.

Zur Beschreibung der Symbole in Form von geschlossenen Polygonen können in an sich bekannter Weise nur die Koordinaten der Eckpunkte 13 der Symbole 10, 11 und 12 angegeben werden. Diese Zuordnung kann in einem Registersatz und/oder Graphikprozessor einer handelsüblichen Graphikkarte erfolgen. Den Bildpunkten eines Symbols 10 werden jeweils gemäß den betriebszustandsspezifischen Daten 7 für das entsprechende Element 1a dieselben Farbwerte zugeordnet und in einem Speicher (Bitmap) 15 gespeichert. Der aus Recheneinheit 8, Speicher 15 und Graphikprozessor 14 gebildeten einkanaligen Steuereinrichtung 20 ist über einen Digital-Analog-Wandler 21 ein Anzeigegerät 22 nachgeordnet.

Ein wesentliches Merkmal der Erfindung besteht in einem in einer ersten Überprüfungsroutine bedarfsweise oder periodisch durchgeführten Vergleich in einem Vergleicher 25, der eingangsseitig mit den Daten 7 beaufschlagbar ist. Zur Überprüfung eines ausgewählten Symbols 10 wird aus dem Speicher 15 ein ausgewählter Bildpunkt - beispielsweise der in seinen Koordinaten ohnehin vorliegende Eckpunkt 13 des Symbols 10 - zugeführt. Wenn der von dem Farbwert des einzelnen Bildpunktes 13 repräsentierte Betriebszustand des zugehörigen Elements 1a mit dem von den Daten 7 in Abhängigkeit der Informationen 5 gemeldeten Betriebszustand übereinstimmt, liefert der Vergleicher 25 ein positives Vergleichsergebnis, das bedarfsweise angezeigt werden kann. Ergibt der Vergleich jedoch eine Ungleichheit, wird von dem Vergleicher 25 eine Fehlermeldung 26 generiert, die über eine Fehleranzeigeeinheit 27 oder unmittelbar durch das Anzeigegerät 22 zur Anzeige gebracht wird.

Da die einzelnen Symbole durch die Auswertung des Farbwertes eines einzigen Bildpunktes in der ersten Überprüfungsroutine sequenziell überprüft werden können, bietet das erfindungsgemäße Verfahren eine sehr schnelle Auswertung der dargestellten Symbole hinsichtlich der Richtigkeit der von ihnen angezeigten Betriebszustände. Das erfindungsgemäße Verfahren erlaubt daher verhältnismäßig kurze Reaktionszeiten (im Sekundenbereich) für den Fall, daß eine fehlerhafte Symbolanzeige erfolgt.

Als ausgewählter Bildpunkt des zu überprüfenden Symbols kann bei einer beispielsweise kreisförmigen Symbolfläche auch der Kreismittelpunkt gewählt werden. Dies ist vorteilhaft, wenn zur Beschreibung des Kreises Mittelpunkt und Radius als Polarkoordinaten vorliegen.

Das Anzeigegerät 22 zeigt neben den schematisch angedeuteten Symbolen 10, 11 und 12 ein dem weiteren Element 2 entsprechendes Symbol 30 an, das sich über ein Verbindungssymbol 31 an das Symbol 12 anschließt. Dem Verbindungssymbol 31 sind spezielle Kennungsdaten zugeordnet, die das Verbindungssymbol als sicherungstechnisch unrelevant kennzeichnen. Das Verbindungssymbol wird daher der ersten Prüfungsroutine nicht unterzogen.

Eine Zusatzsteuerung 40 enhält ein einstellbares Zeitglied 41 und einen Speicher 42, aus dem bedarfsweise nach Maßgabe des Zeitgliedes 41 vorgegebene Farbwerte in den Speicher 15 geladen werden können, um dadurch eine weitere Überprüfungsroutine zu initiieren. Bei betriebsgemäß ablaufendem Verfahren werden so die in den Speicher 15 geladenen, von den ursprünglichen Farbwerten abweichenden Farbwerte des jeweils ausgewählten Bildpunktes als mit den durch die Daten 7 repräsentierten Betriebszuständen nicht übereinstimmende Werte durch den Vergleicher 25 erkannt; entsprechend werden Fehlermeldungen 26 generiert. Das Generieren der Fehlermeldungen 26 wird von der Zusatzsteuerung 40 überwacht, die ihrerseits beim Ausbleiben der Fehlermeldungen ein Alarmsignal 43 generiert. Die in dem Speicher 42 enthaltenen Farbwerte können den ursprünglichen Farbwerten derart zugeordnet werden, daß sich eine für das menschliche Auge kaum wahrnehmbare Farbänderung auf dem Anzeigegerät 25 ergibt. Dadurch kann die weitere Überprüfungsroutine während des normalen Betriebs ohne Beeinträchtigung des optischen Eindrucks durchgeführt werden.

Die Figuren 2A und 2B zeigen schematisch die Weiche 1 gemäß Figur 1 in verschiedenen Positionen. Bei der in Figur 2A gezeigten Stellung der Weiche in Linkslage sind der linke Strang 50 und die Spitze 51 der Weiche vollflächig farbig ausgelegt, während der freie rechte Strang 52 weiß ausgelegt ist. Bei der alternativen Stellung der Weiche gemäß Figur 2B sind dagegen der rechte Strang 52 und die Spitze 51 farbig ausgelegt, während der linke Strang 50 weiß ausgelegt ist.

Figur 3 zeigt in diesem Zusammenhang mögliche Zuordnungen der Farbwerte zur Spitze 51, zum rechten Strang 52 und zum linken Strang 50 gemäß dem jeweiligen Betriebszustand der Weiche. In der dritten Zeile ist die in Figur 2B dargestellte Position der Weiche, in der vierten Zeile die in der Figur 2A dargestellte Position farblich codiert. Weitere farbwertcodierte Informationen über den Betriebszustand bedeuten: "frei/besetzt" (durch ein Fahrzeug), "verschlossen" (für Fahrpfad vorgesehen und gegen Stellungsveränderung gesperrt), "beansprucht" (für einen Fahrpfad) und einen Störfall (letzte Zeile). In gleicher Weise sind Codierungen für weitere Elemente des Verkehrswegesystems denkbar, so daß insgesamt eine eindeutige farbliche Darstellung der Verkehrswegeprozesse und des Betriebs möglich ist.

Das erfindungsgemäße Verfahren und die erfindungsgemäße Vorrichtung erlauben unter Verwendung einer einkanaligen Schaltung (Hardware) eine Überwachung und Steuerung eines Verkehrswegesystems mit einer hohen Sicherheit, die durch zyklisches Überprüfen des Farbwertes zumindest eines Bildpunktes jedes Symbols gewährleistet ist. Dadurch ist eine Darstellung verkehrstechnischer Informationen auf einem Anzeigegerät in Vollgraphik möglich.

## Patentansprüche

1. Verfahren zum signaltechnisch sicheren Anzeigen verkehrstechnischer Informationen eines Verkehrswegesystems (3), insbesondere eines Gleissystems, auf einem Anzeigegerät (22),
- bei dem von einer Betriebsleiteinrichtung (4), insbesondere von einem Stellwerk, Daten (7) über den Betriebszustand einzelner Elemente (1a,1b,1c,2) abgegebenen werden,
- bei dem den Elementen (1a,1b,1c,2) jeweils aus einzelnen Bildpunkten (13) zusammengesetzte Symbole (10,11,12) zugeordnet werden,
- wobei den Bildpunkten (13) eines Symbols (10) jeweils gemäß den betriebszustandsspezifischen aktuellen Daten (7) für das jeweilige Element (1a) dieselben Farbwerte zugeordnet werden und
- wobei die Farbwerte gespeichert werden,
- bei dem die Symbole (10,11,12) in Vollgraphik auf dem Anzeigegerät (22) dargestellt werden,
dadurch gekennzeichnet, daß
- in einer ersten Überprüfungsroutine der gespeicherte Farbwert eines ausgewählten Bildpunktes (13) eines zu überprüfenden Symbols (10) ausgelesen und der von diesem Farbwert repräsentierte Betriebszustand des zugehörigen Elements (1a) mit dem Datum (7) für das betreffende Element (1a) verglichen wird, bei dem bei Ungleichheit eine Fehlermeldung (26) generiert wird.

2. Verfahren nach Anspruch 1,
**dadurch gekennzeichnet,** daß der ausgewählte Bildpunkt des zu überprüfenden Symbols (10) der Mittelpunkt der Symbolfläche ist.

3. Verfahren nach Anspruch 1,
**dadurch gekennzeichnet,** daß der ausgewählte Bildpunkt (13) des zu überprüfenden Symbols (10) ein Eckpunkt der Symbolfläche ist.

4. Verfahren nach einem der vorangehenden Ansprüche,
**dadurch gekennzeichnet,** daß in einem mehrere Symbole (10,11,12,30) enthaltenden Verkehrswegesystemplan zur Verbindung der Symbole (10,11,12,30) optische Verbindungssymbole (31) dargestellt werden, die durch spezielle Kennungsdaten als sicherungstechnisch unrelevant gekennzeichnet werden.

5. Verfahren nach einem der vorangehenden Ansprüche,
**gekennzeichnet durch** eine weitere Überprüfungsroutine, bei der die gespeicherten Farbwerte zu Testzwecken gezielt verändert werden.

6. Verfahren nach Anspruch 5,
**dadurch gekennzeichnet,** daß die Farbwerte zu vorbestimmten Zeiten, vorzugsweise zyklisch mit vorgegebener Periode, verändert werden.

7. Verfahren nach Anspruch 5 oder 6,
**dadurch gekennzeichnet,** daß die ursprünglichen Farbwerte jeweils durch Farbwerte ersetzt werden, die einer für das menschliche Auge kaum wahrnehmbaren Farbänderung entsprechen.

8. Verfahren nach Anspruch 5, 6 oder 7,
**dadurch gekennzeichnet,** daß infolge der Farbwertänderungen generierte Fehlermeldungen (26) automatisch protokolliert werden und daß anschließend zum Abschluß der weiteren Überprüfungsroutine wieder die ursprünglichen Farbwerte eingestellt werden.

9. Vorrichtung zur Durchführung des Verfahrens nach einem der vorangehenden Ansprüche, mit
- einer einkanaligen Steuereinrichtung (20) mit einer Recheneinheit (8), die geeignet ist um den einzelnen Elementen (1a, 1b,1c,2) des Verkehrswegesystems (3) die aus einzelnen Bildpunkten (13) zusammengesetzten Symbole (10,11,12) zu zuordnen und die geeignet ist um, gemäß den von der Betriebsleiteinrichtung (4) an die Recheneinheit (8) abgegebenen Daten (7) über den aktuellen Betriebszustand der einzelnen Elemente (1a,1b,1c,2), den Bildpunkten (13) jedes Symbols (10) jeweils dieselben betriebszustandsspezifischen Farbwerte zu zuordnen, und mit einem mit der Recheneinheit (8) verbundenen Speicher (15), der geeignet ist um die jeweils zugeordneten aktuellen Farbwerte zu speichern, und
- einem der Steuereinrichtung (20) nachgeordneten Vollgraphik-Anzeigegerät (22) zur Anzeige der Symbole (10,11,12), gekennzeichnet durch
- einen mit der Recheneinheit (8) und dem Speicher (15) verbundenen Vergleicher (25), der geeignet ist um eingangsseitig mit einem aus dem Speicher (15) ausgelesenen Farbwert eines ausgewählten Bildpunktes (13) eines zu überprüfenden Symbols (10) und mit dem Datum (7) für das betreffende Element (1a) beaufschlagt zu werden zu werden und der geeignet ist um bei Ungleichheit zwischen dem von dem Farbwert repräsentierten Betriebszustand des betreffenden Elements (1a) und dem Datum (7) für das betreffende Element (1a), eine Fehlermeldung (26) zu generieren.

## Claims

1. Fail-safe signalling method for displaying traffic information in a traffic route system (3), in particular a track system, on a display device (22),
- in which data (7) relating to the operational state of individual elements (1a, 1b, 1c, 2) are output by an operational control unit (4), in particular by a signal box,
- in which symbols (10, 11, 12) which are composed in each case of individual pixels (13) are assigned to the elements (1a, 1b, 1c, 2),
- the same colour values being assigned to the pixels (13) of a symbol (10) in each case in accordance with the operational state-specific present data (7) for the respective element (1a) and
- the colour values being stored,
- in which the symbols (10, 11, 12) are represented in full graphics on the display device (22),
characterized in that
- in a first checking routine the stored colour value of a selected pixel (13) of a symbol (10) to be checked is read out and the operational state, represented by this colour value, of the associated element (1a) is compared with the item of data (7) for the respective element (1a), in which, in the event of non-identity, a fault message (26) is generated.

2. Method according to Claim 1, characterized in that the selected pixel of the symbol (10) to be checked is the centre point of the surface of the symbol.

3. Method according to Claim 1, characterized in that the selected pixel (13) of the symbol (10) to be checked is a corner point of the surface of the symbol.

4. Method according to one of the preceding claims, characterized in that optical connection symbols (31), which are distinguished as irrelevant in terms of safety technology by means of specific identification data, are represented in a traffic route system plan which contains a plurality of symbols (10, 11, 12, 30) and serves the purpose of connecting the symbols (10, 11, 12, 30).

5. Method according to one of the preceding claims, characterized by a further checking routine in which the stored colour values are selectively changed for test purposes.

6. Method according to Claim 5, characterized in that the colour values are changed at predetermined times, preferably cyclically with a prescribed period.

7. Method according to Claim 5 or 6, characterized in that the original colour values are each replaced by colour values which correspond to a change in colour which can hardly be perceived by the human eye.

8. Method according to Claim 5, 6 or 7, characterized in that fault messages (26) which are generated as a result of the changes in colour value are logged automatically, and in that the original colour values are subsequently set again at the conclusion of the further checking routine.

9. Device for carrying out the method according to one of the preceding claims, with
- a single-channel control unit (20) having an arithmetic unit (8) which is suitable for assigning to the individual elements (1a, 1b, 1c, 2) of the traffic route system (3) the symbols (10, 11, 12) which are composed of individual pixels (13) and which is suitable for assigning to the pixels (13) of each symbol (10) in each case the same operational state-specific colour values in accordance with the data (7) which are output to the arithmetic unit (8) by the operational control unit (4) and relate to the present operational state of the individual elements (1a, 1b, 1c, 2), and having a memory (15) which is connected to the arithmetic unit (8) and is suitable for storing the respectively assigned present colour values, and
- a full graphic display device (22) which is arranged downstream of the control unit (20) and has the purpose of displaying the symbols (10, 11, 12)
characterized by
- a comparator (25) which is connected to the arithmetic unit (8) and the memory (15) and is suitable for being acted on on the input side by a colour value, read out from the memory (15), of a selected pixel (13) of a symbol (10) to be checked, and by the item of data (7) for the respective element (1a), and which comparator (25) is suitable for generating a fault message (26) in the event of non-identity between the operational state, represented by the colour value, of the respective element (1a) and the item of data (7) for the respective element (1a).

## Revendications

1. Procédé d'affichage, sûr du point de vue de la technique de signalisation, d'informations techniques de circulation d'un système de voies de circulation (3), notamment d'un système de voies ferrées, sur une console de visualisation (22),
- selon lequel, des données (7) relatives à l'état de marche d'éléments (1a, 1b, 1c, 2) sont envoyées par un dispositif de commande d'exploitation (4), notamment par un poste d'aiguillage,
- selon lequel, des symboles (10, 11, 12) composés de points d'image individuels (13) sont associés aux éléments (1a, 1b, 1c, 2),
- les mêmes valeurs chromatiques étant respectivement associées aux points d'image (13) d'un symbole (10) en fonction des données (7) actuelles spécifiques à l'état de marche pour chaque élément (1a), et
- les valeurs chromatiques étant mémorisées,
- selon lequel, les symboles (10, 11, 12) sont représentés en mode graphique intégral sur la console de visualisation (22),
caractérisé par le fait que
- la valeur chromatique mémorisée d'un point d'image (13) choisi d'un symbole (10) à vérifier est lue au cours d'une première routine de vérification, et que l'état de marche de l'élément (1a) associé représenté par cette valeur chromatique est comparé à la donnée (7) pour l'élément (1a), et qu'un message d'erreur (26) est généré en cas de disparité.

2. Procédé selon la revendication 1,
caractérisé par le fait que le point d'image choisi du symbole (10) à vérifier est le point central de la surface du symbole.

3. Procédé selon la revendication 1,
caractérisé par le fait que le point d'image (13) choisi du symbole (10) à vérifier est un point d'angle de la surface du symbole.

4. Procédé selon l'une quelconque des revendications précédentes,
caractérisé par le fait que, sur un plan de système de voies de circulation contenant plusieurs symboles (10, 11, 12, 30), il est représenté des symboles optiques de liaison (31) qui sont destinés à la liaison des symboles (10, 11, 12, 30) et qui sont repérés comme ne relevant pas de la technique de sécurité par des données d'identification spécifiques.

5. Procédé selon l'une quelconque des revendications précédentes,
caractérisé par une autre routine de vérification, au cours de laquelle les valeurs chromatiques mémorisées sont modifiées sciemment à des fins de tests.

6. Procédé selon la revendication 5,
caractérisé par le fait que les valeurs chromatiques sont modifiées à intervalles de temps prédéterminés, de préférence cycliquement selon une périodicité prédéterminée.

7. Procédé selon la revendication 5 ou 6,
caractérisé par le fait que les valeurs chromatiques initiales sont respectivement remplacées par des valeurs chromatiques qui correspondent à une modification de couleur qui est à peine perceptible pour l'oeil humain.

8. Procédé selon l'une des revendications 5, 6 ou 7,
caractérisé par le fait que des messages d'erreur (26) générés suite à des modifications de valeurs chromatiques sont automatiquement consignés dans un protocole, et qu'après cela, les valeurs chromatiques initiales sont à nouveau réglées pour terminer l'autre routine de vérification.

9. Dispositif destiné à la mise en oeuvre du procédé selon l'une quelconque des revendications précédentes, comportant
- un dispositif de commande (20) à un canal avec une unité de calcul (8), qui est appropriée pour associer les symboles (10, 11, 12) constitués de points d' image individuels (13) aux différents éléments (1a, 1b, 1c, 2) du système de voies de circulation (3), qui, en fonction des données (7) relatives à l'état de marche actuel des différents éléments (1a, 1b, 1c, 2) envoyées par le dispositif de commande d'exploitation (4) à l'unité de calcul (8), est appropriée pour associer aux points d'image (13) de chaque symbole (10) les mêmes valeurs chromatiques spécifiques à l'état de marche, et avec une mémoire (15) reliée à l'unité de calcul (8), qui est appropriée pour mémoriser les valeurs chromatiques associées respectivement actuelles, et
- disposée en aval du dispositif de commande (20), une console de visualisation (22) destinée à l'affichage en mode graphique intégral des symboles (10, 11, 12),
caractérisé par
- un comparateur (25) relié à l'unité de calcul (8) et à la mémoire (15), qui est approprié pour être alimenté du côté entrée par une valeur chromatique lue à partir de la mémoire (15) d'un point d'image (13) choisi d'un symbole (10) à vérifier, et par la donnée (7) pour l'élément (1a) concerné, et qui est approprié pour générer un message d'erreur (26) en cas de disparité entre l'état de marche de l'élément (1a) concerné représenté par la valeur chromatique et la donnée (7) pour l'élément (1a) concerné.
